# EUROPEAN PATENT APPLICATION

(11) **EP 2 045 177 A2**
(43) Date of publication of application: **08.04.2009**
(21) Application number: 08165476.6
(22) Date of filing: 30.09.2008
(51) Int. Cl.: B62D 55/21, B62D 55/26

(54) **Track shoe assembly for heavy tracked vehicle**

(30) Priority: 04.10.2007 TH 503207
(71) Applicant: Chaiseri Metal & Rubber Co., Ltd., 12140 Pathumtanee (TH)
(72) Inventor: Kitti, Kunhiran CHAISERI METAL & RUBBER CO.,LTD, Ladlumkaew, 12140, Pathumtanee (TH)
(74) Representative: Bentz, Jean-Paul

(57) **Abstract**

The present invention related to the track shoe assembly for tracked vehicle. More specifically, the present invention related to the track shoe assembly for heavy tracked vehicle (1). The track shoe assembly (2) of the present invention is a double pin type, having different shapes of rubber pad suitable for different terrain. The rubber pad (40) of the present invention is wider and has larger ground contact surface area than the conventional rubber pad. The track shoe assembly according to the present invention is also durable and lighter than the conventional track shoe assembly. The weight is reduced by using rubber. Thus, the service life is expanded and fuel consumption is reduced. In addition, only the failure part can be replaced instead of replacing the entire track shoe assembly. Therefore, reduces maintenance cost and time.

## Description

### FIELD OF THE INVENTION

This application related to track shoe assembly for heavy tracked vehicle.

### BACKGROUND OF THE INVENTION

Military weapons such as artillery and projectiles having been continuously developed to increase their destructive power. On the contrary, armour for vehicle is also being continuously developed to increase resistance to the destructive power of such weapons. When both developed weapon and armour are installed on a tracked vehicle, the increase of the overall weight of the vehicle is, hence, inevitable. Such increase in the vehicle weight demands a higher power engine and an upgraded gear box that can transmit higher horse powers. This demand further increases the overall weight of the original vehicle while the ground contact surface area of the track, which distributes the overall weight of the vehicle to the ground, is still constant. The outcome is the ground pressure (the force that acts on the road surface per unit area) highly increases. Therefore, there is a need for a track shoe assembly developed to have high efficiency for such high load.

The existing track shoe for a heavy tracked vehicle is manufactured from a single piece of molding cast steel having high specific gravity (sp. gr. = 7.85). When any part of the shoe wear out/break the whole piece cast steel track shoe has to be replaced. This is due to the following example problems.

The first example is the sprocket wheel drives only at the end of the track shoe body of the conventional track shoe assembly. When the track shoe body wear out up to a point, the entire track shoe assembly has to be replaced.

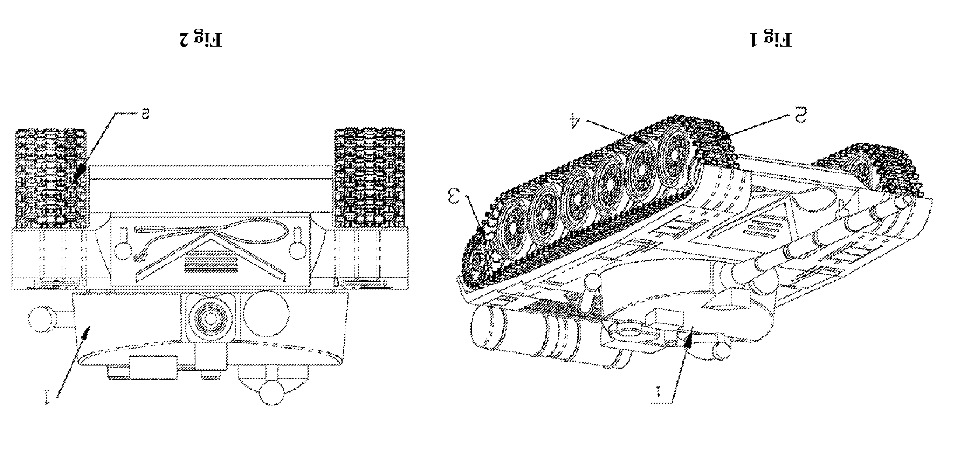

The conventional track shoe for a heavy track vehicle, such as the tracked vehicle shown in figure 1, is a single track guide, single pin, cast steel type track shoe assembly having no rubber pad. The lack of the rubber pad generates loud noise and so high ground pressure on the road surface that can damage the road surface, especially the asphalt or the concrete roads. In addition, the solid track guide having no recess to reduce friction with the side wall of the road wheel requires unnecessary high power to move the vehicle. The asymmetry shape of the track shoe assembly also leaves moving direction footprint of the vehicle when the vehicle run on the road/terrain, which makes the tracking of the vehicle easily and not suitable for strategic deployment in warfare scenarios.

The conventional track shoe assembly is manufactured by casting steel in a mold. If one needs to manufacture by forging, a large forging machine having force 6,000-8,000 tons is required. The requirement of such machine means high investment.

The present invention is provided to solve all of the above mentioned problems of the prior art. The track shoe assembly of the present invention is a double-pin type having end connectors that link each track shoe body together. Such end connector design provides a stronger and easier to maintain connector. When failures/damages occur at any part of the track shoe assembly, only that failure/damage part needs to be replaced rather than the entire track shoe assembly. This leads to lower maintenance cost and less maintenance time.

The present invention relates to the track shoe assembly of a heavy tracked vehicle. More specifically, the present invention relates to a holed track guide, double pin type track shoe assembly of the heavy tracked vehicle. The hole of the track guide is provided to reduce friction between the wall of the track guide and the wall of the road wheel. End connectors are used to link the track shoe assembly together. The rubber pad of the present track shoe assembly has two shapes, a dumbbell-shape or a V-shape type, depending on the terrain the vehicle is deployed.

The track shoe assembly of the present invention is a composite track shoe assembly. Each track shoe assembly of the present invention comprises of two track shoe bodies, two pins, two rubber pads, and two end connectors. Each track shoe body comprises of three steel tubes, an end plate and an end plate having track guide. The track shoe assembly of the present invention can eliminate the problems of the prior art previously mentioned before. For example, when any part of the track shoe assembly of according to the present invention is wear out or damaged, only the wear out or damaged part has to be replaced rather than the entire track shoe set.

The first example is the rubber pad which is the part wear outs quickly due to its direct contact with the terrain surface. When the rubber pad wears out to a limit, only the rubber pad is replaced while the remaining parts are not.

The second example is the end connector which is the part that directly receives the driving force from the engine via the sprocket wheel. Rubbing continuously occurs between the end connector and the sprocket wheel while the vehicle is moving. The end connector, thus, wears out very fast as such the rubber pad. When the end connector wears out to a limit, only the worn out end connector is replaced while the remaining parts are not.

An objective of the present invention is to use rubber (sp. gr 1.14) which is lighter than steel (sp. gr. 7.85) in place of steel in several non-major components. Steel is still needed in major components which require strength or to sustain the weight of the tracked vehicle. The use of rubber significantly decreases the overall weigh of the tracked vehicle due to the specific gravity of rubber is 7 times lower than the specific gravity of steel. The decreased weight reduces the load of the engine which results in less fuel consumption.

The track shoe assembly of the present invention is designed to be able to be separately manufactured. Thus, there is no need for a large forging machine, only one having 1,200 tons forging force is enough. The manufacturing process has low investment cost and electricity requirement is greatly reduced. In addition, when any part of the assembly wear out, only that part is replaced rather than all the assembly. For example, the present track shoe assembly is connected using the end connectors. The sprocket wheel drives the track at these end connectors. When an end connector wear out, only the wear out end connector is replaced rather than the entire set of the track shoe assembly. In a battle field, when failures and/or damages occur at any part of the assembly, only the failure and/or damage part needed to be replaced. This means lower maintenance cost and less maintenance time consumption which is suitable for battle field operation.

The end plate according to the present invention is the combination of two 2 components, i.e. an end plate and a track guide, in order to reduce weight and manufacturing cost. The end plate having track guide of the present invention acts as an end plate on one side of the track shoe body when the left and the right hand side track shoe body are placed by facing the side having the end plate having track guide. The end plate having the track guide of the present invention also serves as a track guide. The guide member has a hole in the direction transverse to the height of the guide member in order to reduce the friction occurs at the contact surface between the guide member and the road wheel. Therefore, the engine load and fuel consumption are reduced.

The rubber pad according to the present invention is a renewable rubber pad type which is different from the rubber pad of the prior art. In addition, during campaign there is no need to stock complete sets of the track shoe assembly. Only the rubber pad is stocked due to it is the consumable part. The rubber pad according to the present invention has two different shapes. Each shape suits to different strategic objectives and terrain while can still use the same track shoe assembly.

The dumbbell-shape rubber pad is a general purpose rubber pad. The dumbbell-shape rubber pad also has larger ground contact surface area than the rubber pad of the prior art. The larger ground contact surface area means lower ground pressure presses on the road surface which results in higher tractability and stability of the vehicle. It also allows the vehicle to run on concrete and/or asphalt road at a higher speed while reducing damaging to the road surface. In addition, the symmetrical, non-directional shape of the dumbbell-shape rubber pad does not leave any indicator that shows the moving direction of the vehicle, which results in more difficult in tracing the vehicle. The V-shape rubber pad has a parallelogram shape which is effective in expelling water, soil, and/or sand off to the left and the right sides of the track. The V-shape rubber pad is suitable for any rescue vehicle or vehicle employed in soft terrain. Due to the heavy weight of the heavy tracked vehicle, e.g. 48-55 tons, when the heavy tracked vehicle is employed in a soft terrain, such as in Thailand, the vehicle will submerge into the ground and the movement is restricted. The V-shape rubber pad will disperse the soil to both sides of the track which will keep the vehicle moving. In addition, occasionally a rescue vehicle has to operate in such soft terrain to rescue another tracked vehicle.

### BRIEF DESCRIPTION OF THE DRAWINGS

Figure 1 shows a perspective view of a heavy tracked vehicle using a conventional track shoe assembly.
Figure 2 is the front view of the heavy tracked vehicle using the conventional track shoe assembly showed in figure 1.
Figure 3 shows another perspective view of the conventional track shoe assembly installed on a sprocket wheel and road wheels.
Figure 4 is the front view of the conventional track shoe assembly assembled installed on the sprocket wheel.
Figure 5 is a perspective view of the conventional track shoe assembly. This figure shows the road wheel side of the track shoe assembly.
Figure 6 is another perspective view of the conventional track shoe assembly. This figure shows the road surface side of the track shoe assembly.
Figure 7 is an exploded perspective view of the conventional track shoe assembly. This figure shows the road wheel side of the track shoe assembly.
Figure 8 is another exploded perspective view of the conventional track shoe assembly. This figure shows the road surface side of the track shoe assembly.
Figure 9 is a perspective view of a heavy tracked vehicle using the track shoe assembly of the present invention having dumbbell-shape rubber pad.
Figure 10 is a front view of the heavy tracked vehicle using the track shoe assembly of the present invention having dumbbell-shape rubber pad.
Figure 11 is a perspective view of the track shoe assembly according to the present invention having dumbbell-shape rubber pad installed on a sprocket wheel and road wheels.
Figure 12 is the front view of the track shoe assembly according to the present invention having dumbbell-shape rubber pad installed on the sprocket wheel.
Figure 13 is another perspective view on the road wheel side of the track shoe assembly according to the present invention having dumbbell-shape rubber pad.
Figure 14 is another perspective view on the road surface side of the track shoe assembly according to the present invention having dumbbell-shape rubber pad.
Figure 15 is an exploded perspective view on the road surface side of the track shoe assembly according to the present invention having dumbbell-shape rubber pad.
Figure 16 is another exploded perspective view on the road wheel side of the track shoe assembly according to the present invention having dumbbell-shape rubber pad.
Figure 17 shows a perspective view on the road wheel side of the track shoe body according to the present invention after rubberization.
Figure 18 is another perspective view on the rubber pad side of the track shoe body according to the present invention after rubberization.
Figure 19 is the front view of the track shoe body according to the present invention after rubberization.
Figure 20 is the top view of the track shoe body on the road wheel side according to the present invention after rubberization.
Figure 21 is the bottom view of the track shoe body on the rubber pad installation side according to the present invention after rubberization.
Figure 22 shows the side view of the track shoe body according to the present invention after rubberization.
Figure 23 shows a perspective view of the track shoe body according to the present invention before rubberization. This figure shows the road wheel side.
Figure 24 shows another perspective view of the track shoe body according to the present invention before rubberization. This figure shows the rubber pad side.
Figure 25 is the front view of the track shoe body according to the present invention before rubberization.
Figure 26 is the top view of the track shoe body according to the present invention before rubberization. This figure shows the road wheel side.
Figure 27 is the bottom view of the track shoe body according to the present invention before rubberization. This figure shows the rubber pad installation side.
Figure 28 is the side view of the track shoe body according to the present invention before rubberization.
Figure 29 is an exploded perspective view on the road wheel side of the track shoe assembly according to the present invention before assembly and rubberization.
Figure 30 is another exploded perspective view on the rubber pad installation side of the track shoe assembly according to the present invention before assembly and rubberization.
Figure 31 shows a perspective view on the road wheel side of the end plate having track guide type according to the present invention before assembly.
Figure 32 shows another perspective view on the rubber pad installation side of the end plate having track guide according to the present invention before assembly.
Figure 33 is the front view of the end plate having track guide according to the present invention before assembly.
Figure 34 is the top view of the end plate having track guide according to the present invention before assembly.
Figure 35 is the bottom view of the end plate having track guide according to the present invention before assembly.
Figure 36 is the side view on the road wheel side of the end plate having track guide according to the present invention before assembly.
Figure 37 is a sectional view taken along line 37-37 of the end plate having track guide according to the present invention.
Figure 38 is side view of the end plate having track guide on the track shoe body side according to the present invention.
Figure 39 is a perspective view of the dumbbell-shape rubber pad on the road surface side according to the present invention.
Figure 40 is a perspective view of the dumbbell-shape rubber pad on the track shoe installation side according to the present invention.
Figure 41 is the front view of the dumbbell-shape rubber pad for the track shoe assembly according to the present invention.
Figure 42 is the bottom view of the dumbbell-shape rubber pad for track shoe assembly according to the present invention.
Figure 43 is the top view of the dumbbell-shape rubber pad for the track shoe assembly according to the present invention.
Figure 44 is the side view of the dumbbell-shape rubber pad for the track shoe assembly according to the present invention.
Figure 45 is a perspective view of the formed steel plate according to the present invention before rubberization. This figure shows the side confronts with the track shoe assembly
Figure 46 is another perspective view of the formed steel plate according to the present invention before rubberization. This figure shows the rubber pad side.
Figure 47 is the front view of the formed steel plate according to the present invention before rubberization.
Figure 48 is the top view of the formed steel plate according to the present invention before rubberization.
Figure 49 is the bottom view of the formed steel plate according to the present invention before rubberization.
Figure 50 is the side view of the formed steel plate according to the present invention before rubberization.
Figure 51 is the perspective view on the road wheel side of the track shoe assembly according to the present invention equipped with the V-shape rubber pad according to the present invention.
Figure 52 is the perspective view on the ground contact surface side of the track shoe assembly according to the present invention equipped with the V-shape rubber pad according to the present invention.
Figure 53 is the perspective view of the V-shape rubber pad on the track shoe installation side according to the present invention.
Figure 54 is the perspective view of the V-shape rubber pad on the ground contact surface side according to the present invention.
Figure 55 is the front view of the V-shape rubber pad according to the present invention.
Figure 56 is the top view of the V-shape rubber pad according to the present invention.
Figure 57 is the bottom view of the V-shape rubber pad according to the present invention.
Figure 58 is the side view of the V-shape rubber pad according to the present invention.

### DETAIL DESCRIPTION OF THE PREFERRED EMBODIMENTS

With reference to figures 1 and 2, the heavy tracked vehicle 1 using the conventional track shoe assembly 2. The suspension system of the heavy tracked vehicle comprises of the conventional track shoe assembly 2, sprocket wheel 3 and road wheel 4.

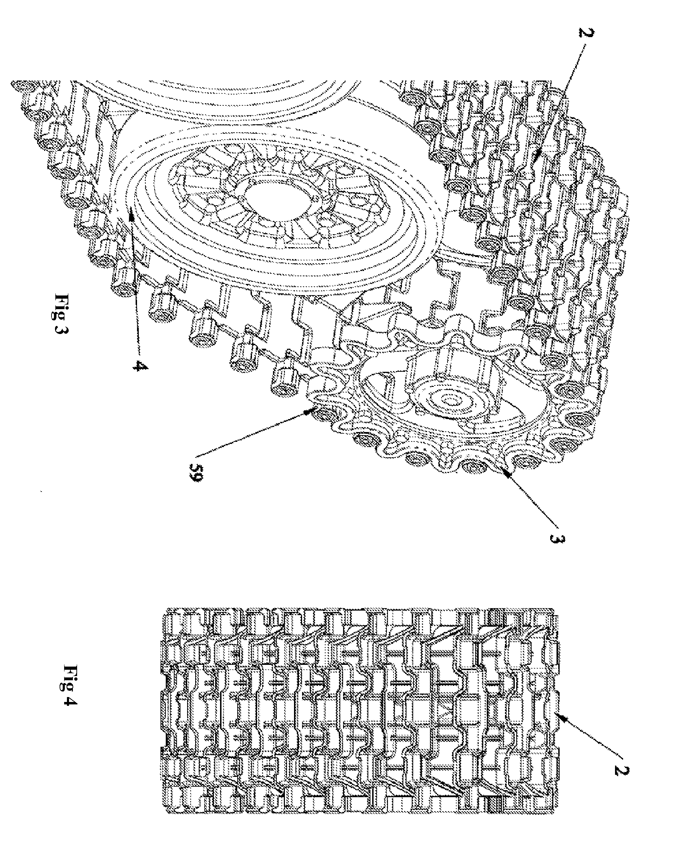

Figures 3 and 4 show the conventional track shoe assembly 2 wound around the said sprocket wheel 3 and the said road wheel 4. The movement of the track begins from the transmission of power from the engine to the sprocket wheel 3. The sprocket wheel 3 then drives the track shoe assembly 2 at the end of the track shoe assembly 59.

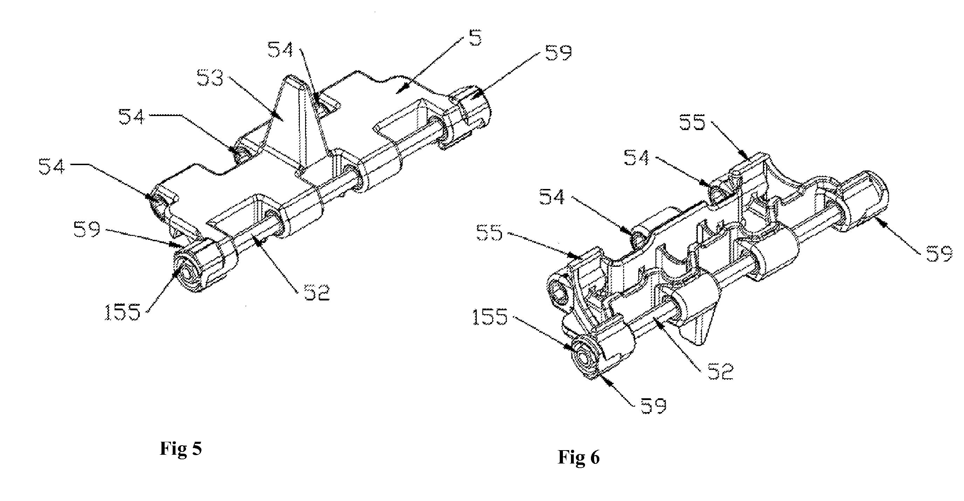

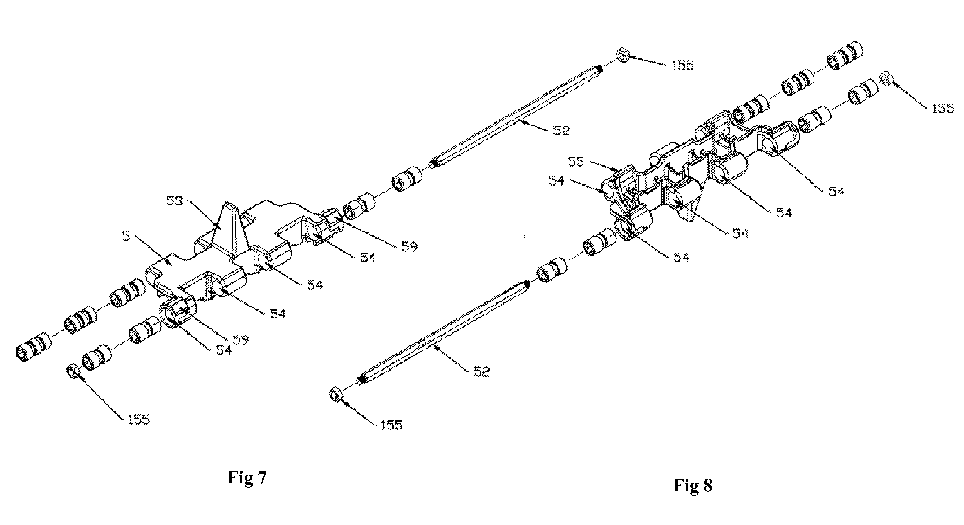

Figures 5-8 illustrate a conventional track shoe assembly. This type of track shoe assembly comprises of track shoe body 5 made from a solid cast steel and pin 52. The pin 52 is inserted through the hole 54 of the track shoe body 5 and the hole 54 of the adjacent track shoe body 5. Two nuts 155 are installed at both ends of the pin 52. The pin 52 acts as a connector that joins two adjacent track shoe bodies.

The track shoe body 5 comprises of track guide 53 and the both left and right ends of the track shoe body 59. The solid track guide 53 guides the track shoe assembly to stay in the middle of the solid road wheel 4, and is the part that continuously rubs against the road wheel. The both end of the track shoe assembly 59, which is the part that is driven by the sprocket wheel 9, is the part that always rubs against the teeth of the sprocket wheel which results in wear out and has to replace the entire track shoe assembly.

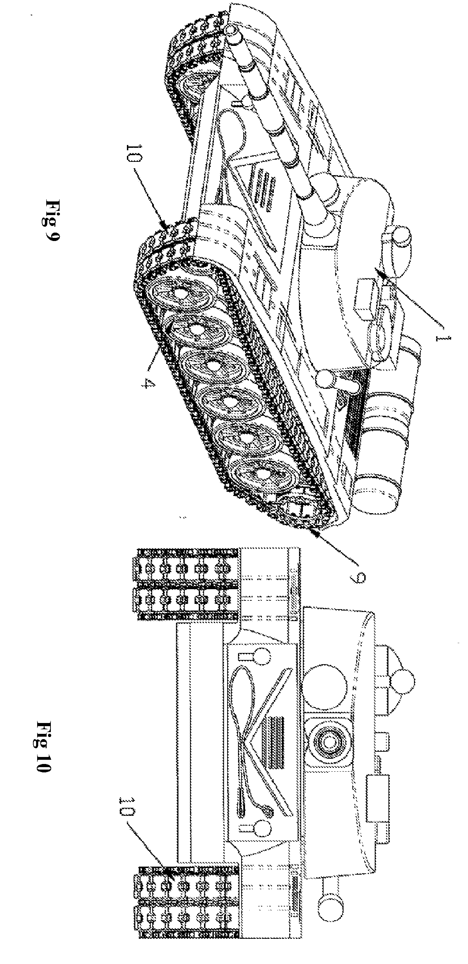

Figures 9-10 show a heavy tracked tank 1 employing the track shoe assembly 10 according to the present invention. The suspension system of the heavy tracked tank 1 according to the present invention comprises of the track shoe assembly 10 according to the present invention, a sprocket wheel 9, and road wheel 4 on both the left and the right sides of the tank.

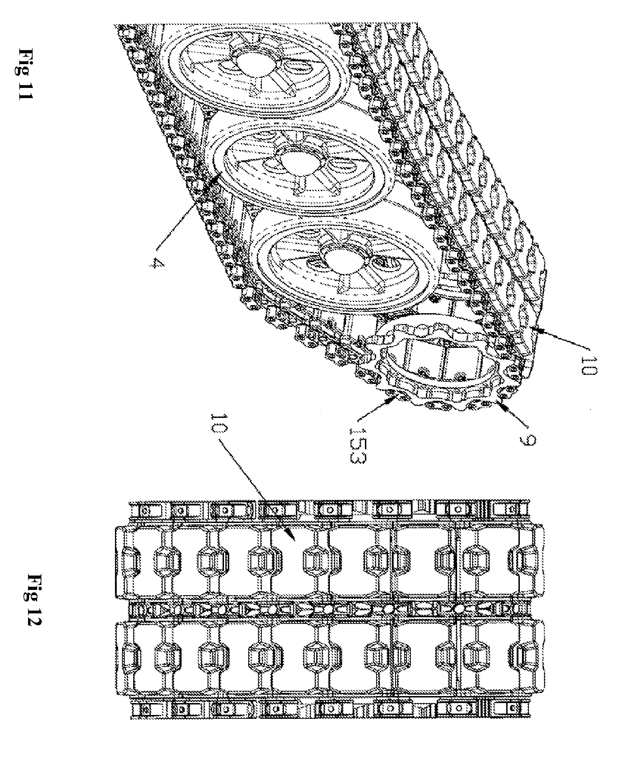

Figures 11-12 show the track shoe assembly with dumbbell-shape rubber pad 10 according to the present invention, a sprocket wheel 9, and road wheel 4. The operation of the track begins from the transmission of power from the engine to the sprocket wheel 9. Then the sprocket wheel 9 drives the track shoe assembly 10 at the end connector 153.

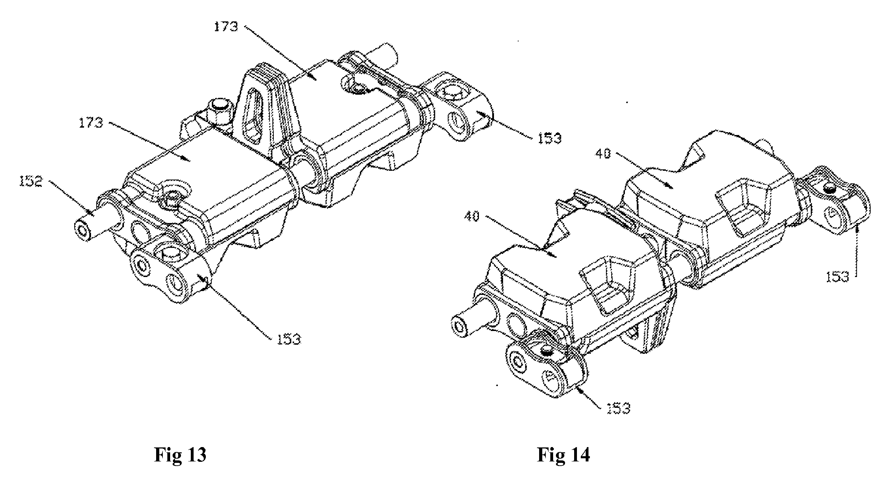

Figures 13-14 show a complete set of a track shoe assembly with dumbbell-shape rubber pad according to the present invention. This assembly is ready to install the end connector 153 to connect with the pin 152 of the adjacent track shoe assembly to obtain the track shoe assembly 10 shown in figure 11. The part that touches the ground is the dumbbell-shape rubber pad 40 and the part that is pressed by the road wheel is the surface 173 of the track shoe assembly.

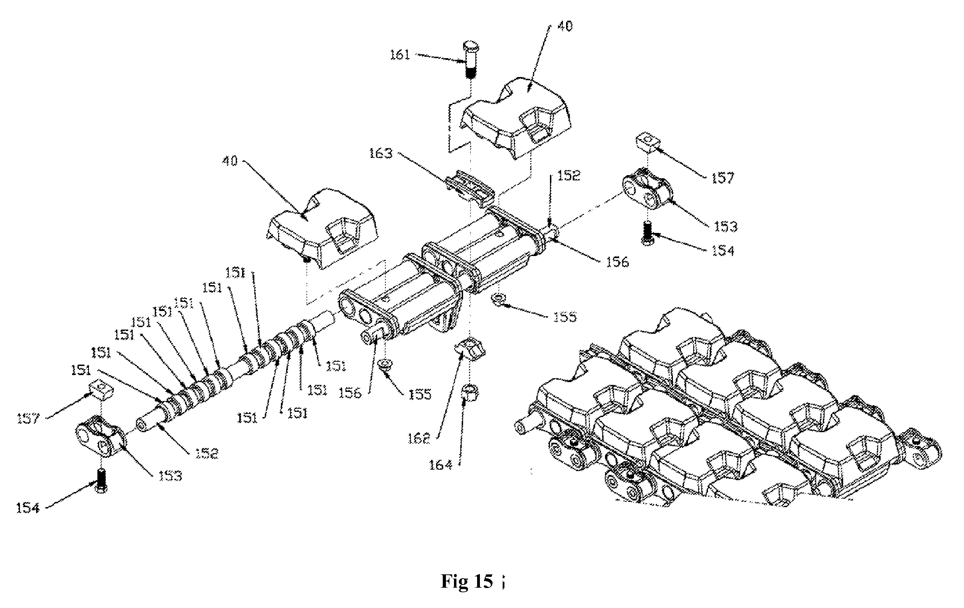

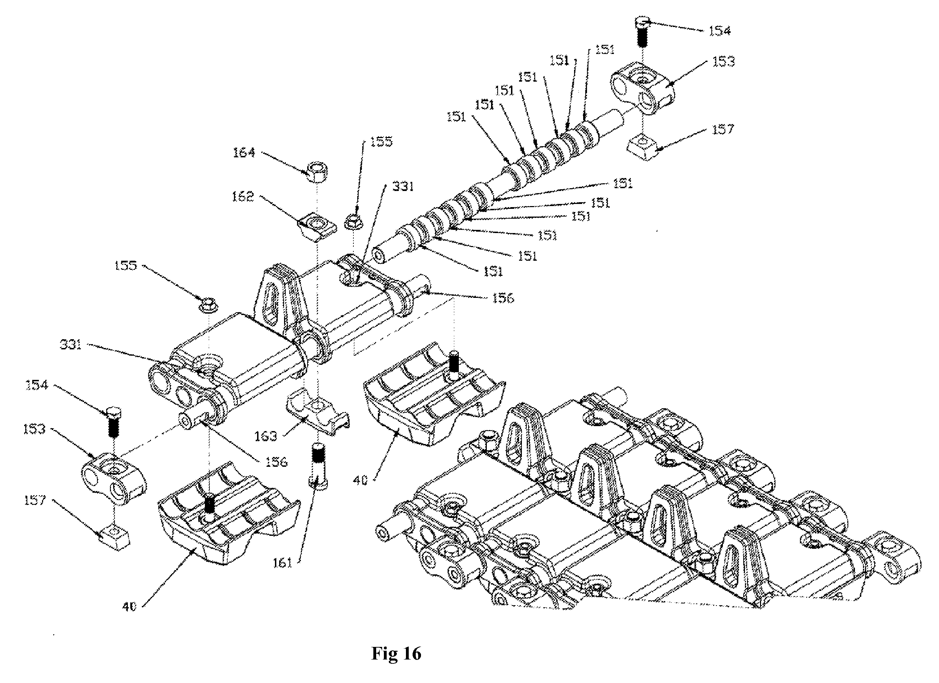

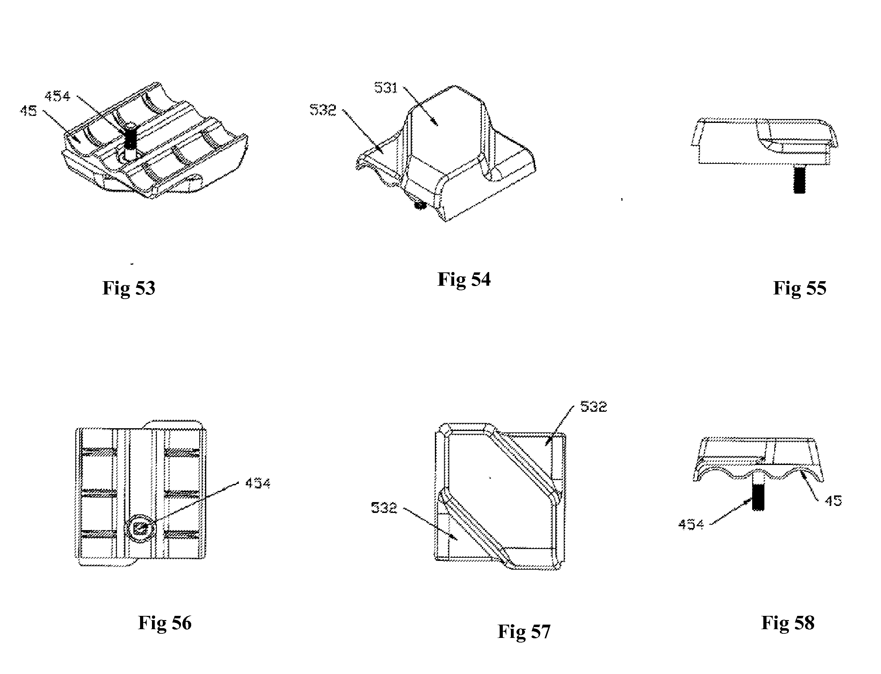

Figures 15-16 show exploded perspective views of the track shoe assembly with dumbbell-shape rubber pad 40 according to the present invention. The V-shape rubber pad (figure 54) can also be used. The track shoe assembly according to this embodiment is assembled by inserting the pins 152 through the holes 294 of two track shoe bodies 17. The inside diameter of the hole 294 is slightly smaller than the outside diameter of the rubber bushing 151 in order to fit and fix the pin 152 inside the hole 294, thus attenuating the vibration generates from the movement of the track. Both ends of the pin 152 are installed with end connectors 153 and fixed in place with screw 154 that is inserted through the rectangular holes 156 provided at both ends of the pin 152 and fixed with wedge 157. The screw 154 prevents the end connector 153 from slipping off the pin 152. At the middle between two track shoe assemblies a clearance is provided for the installation of upper connector 162 and the lower connector 163 which are combined together and fixed in place using screw 164. The upper connector 162 and the lower connector 163 both link together at the middle of the pins 152. The dumbbell-shape rubber pads 40 or the V-shape rubber pads are fixed to the track shoe body 17 using one bolt 155 per each rubber pad.

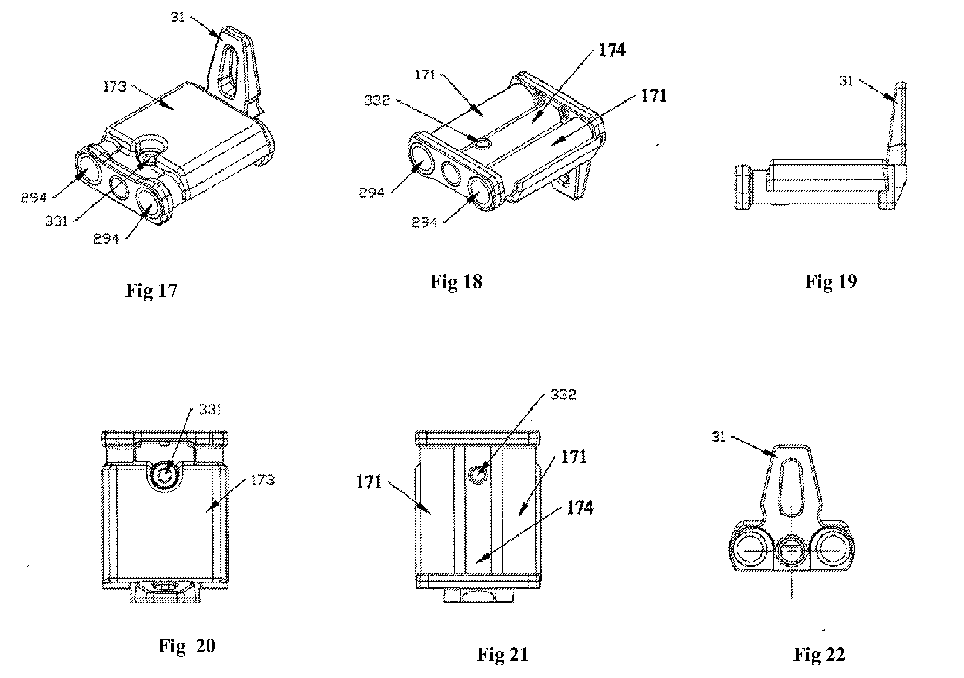

Figures 17-22 show a complete set of one track shoe body of the present invention 17 after rubberization. The said track shoe body has an end plate having track guide 31 as a major component that guide the track shoe assembly to stay between the road wheel 4 which will be discussed in detail later. The road wheel side of track shoe assembly 173 is provided to support the road wheel. The inside structure of surface 173 is rubberized steel tubes with increased height to support the road wheel. The surface that supports the rubber pad is rubberized along the curvatures of the steel tubes 171 and 174. A hole 332 is provided at the middle for the rubber pad fixing bolt 454 which is inserted from the hole 331 and fixed with nut 155 which will be discussed in detail later.

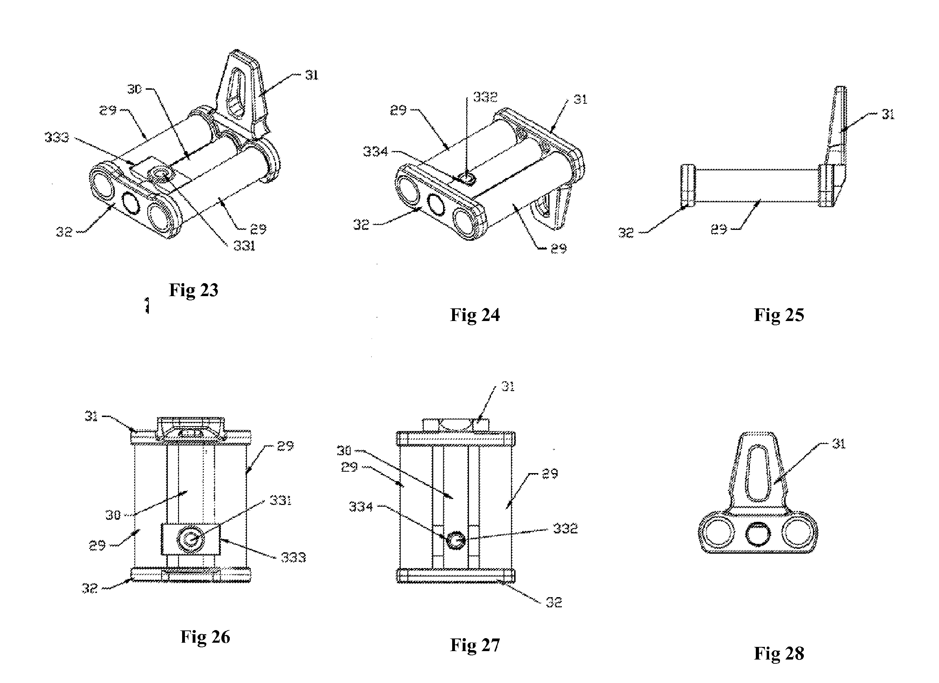

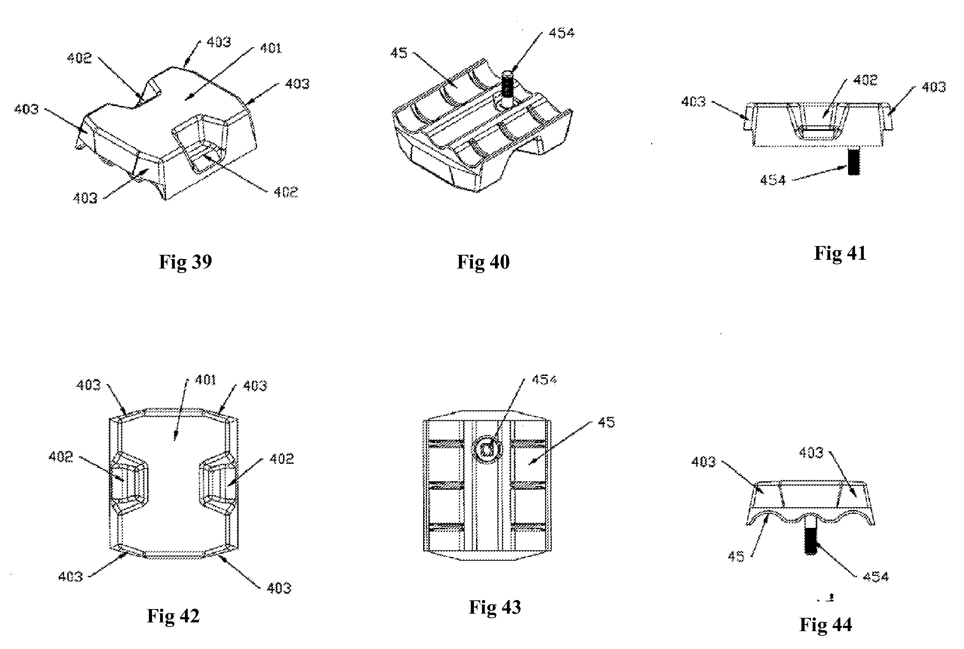

Figures 23 to 28 show the track shoe body 17 before rubberization. The track shoe body 17 comprises of two steel tubes 29 and one steel tube 30 lays parallel between the two steel tubes 29. All three tubes are linked altogether using an end plate 32 and an end plate having track guide 31 at both ends of the steel tubes. The steel tube 30 has a rectangular solid steel block 33 with a bore 331 communicates to a bore 332. All three steel tubes are linked by welding at the upper surface 333 and the lower surface 334 to provide strength for the connection. The hole 332 is used for fixing a dumbbell-shape rubber pad 40 (figure 40) or a V-shape rubber pad (figure 53) with the fixing bolt 454 inserted via the hole 332 through the hole 331 and tightened with the nut 155. The steel tubes 29 and 30 of the track shoe body has two holes 294 along the entire length of the track shoe body 17 for the insertion of the pins 152 with rubber bushings 151.

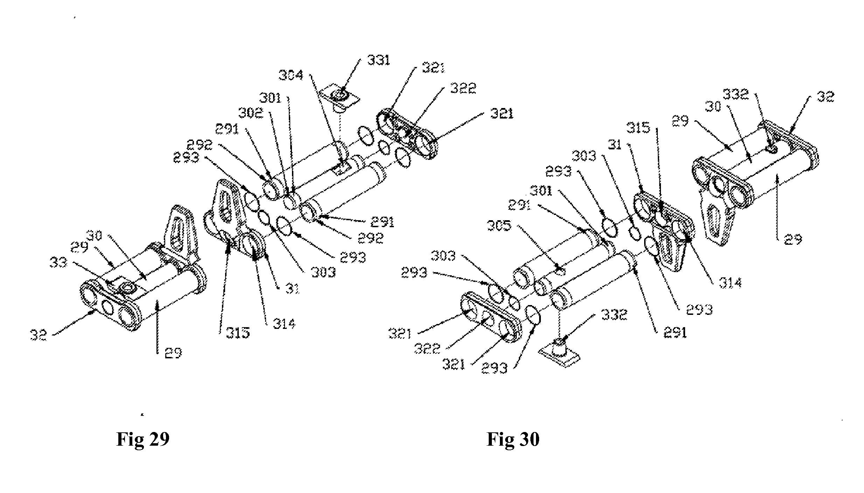

Figures 29-30 show exploded perspective views of the track shoe body 17 before assembly and rubberization. The said track shoe body comprised of two steel tubes 29 and one steel tube 30 lays parallel between the two steel tubes 29. Both ends of each tube 29 and 30 have reduced diameter. The tubes 29 and 30 are installed by inserting the reduced ends 291 and 301 into the holes 314 and 315, respectively, of the end plate having track guide. The other reduced ends are inserted into the holes 321 and 322, respectively, of the end plate 32. Copper rings 293 are placed inside the holes 314, 315, 321, and 322 before each reduced end is inserted. Then, the ends 292 and 302 are expanded and the steel tube 30 is drilled to create a rectangular slot 304 for the installation of a rectangular solid steel block 33. Then, the assembly is welded at 333 and 334 to permanently linked all three steel tubes altogether followed by brazing to permanently fix the ends of each steel tube to the end plate. The hole 332 is used for fixing a dumbbell-shape rubber pad 40 or a V-shape rubber pad 530 with the fixing bolt 454 tightened with the nut 155. The steel tubes 29 and 30 of the track shoe body have two holes 294 along the entire length of the track shoe body 17 for the insertion of the pins 152 with the rubber bushings 151.

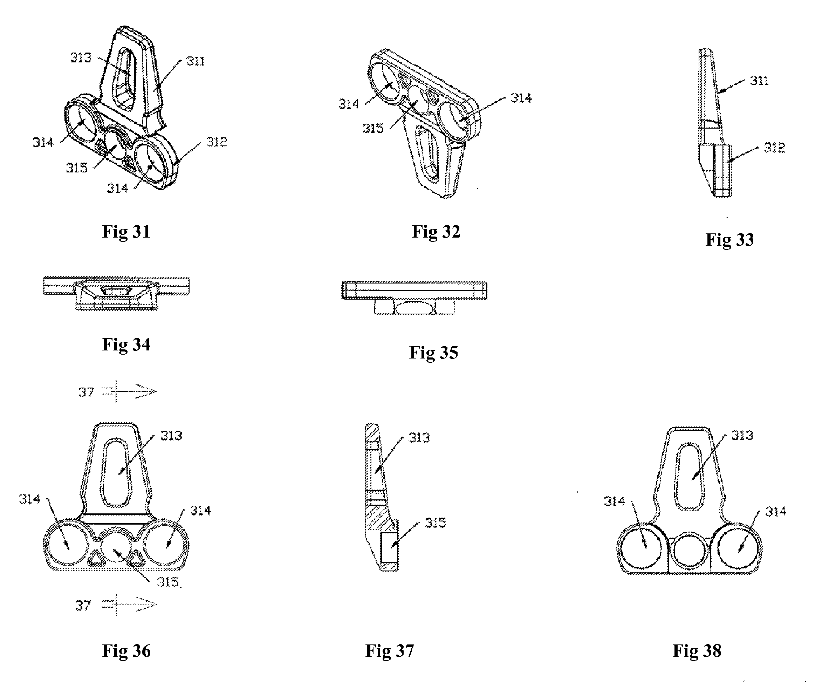

Referring to figures 31-38, the end plate having track guide 31 can be divided into two sections i.e. a track guide 311 and a steel frame 312. The track guide 311 is the part that projects from frame 312. The track guide 312 has round edges at the apex and an elliptic hole 313 at the centre. The elliptic hole 313 is provided to reduce friction between the track guide and the wall of the road wheel while the vehicle is moving. The steel frame 312 has three through bores. The bores 314 are for the steel tubes 29 while the bore 315 is for the steel tube 30.

Figures 39-44 show the dumbbell-shape rubber pad molded to the steel plate 45 (to be discussed in detail later). A fixing bolt 454 is provided to fix the rubber pad to the steel plate 45. The dumbbell-shape rubber pad comprises of front surface 401 and two notches 402 that make the rubber pad look like a dumbbell. The notches are used as service-life indicator of the rubber pad. The corners 403 are slightly sliced off to prevent the ripping off at the edges. The dumbbell-shape rubber pad is suitable for general road surface and terrain due to it facilitates tractability and stability of the vehicle when moving at high speed or during turning.

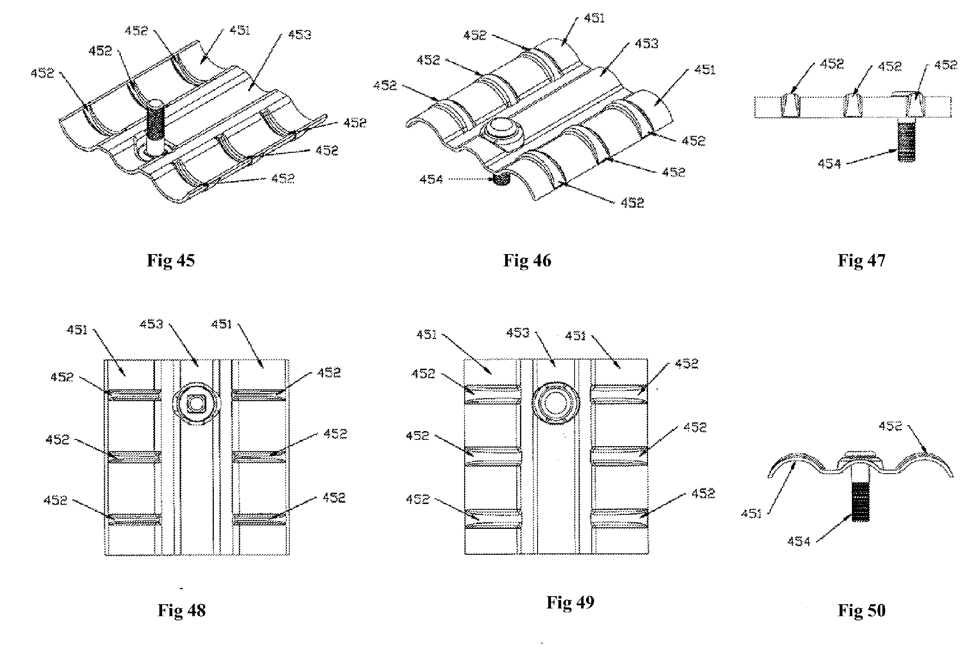

Figures 45-50 show the formed steel plate. The formed steel plate is a rectangular steel plate which is pressed to have arch shape that matches with the curvature of the curves 171 and 174 respectively. The recesses 452 are provided to give additional strength for the formed steel plate. At the ends of the formed steel plate, the fixing screws 454 are fixed for the fixing of the rubber supporter of the track to the track shoe assembly 17.

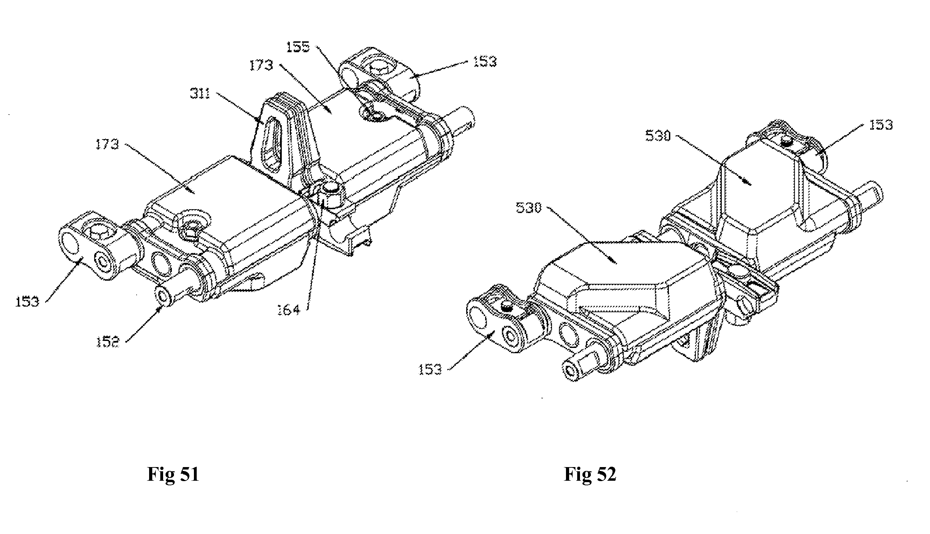

Figures 51-55 show the perspective views of a complete set of one track shoe assembly equipped with the V-shape rubber pad 530 according to the present invention ready for the installation of the end connector 153 with the pin 152 of the adjacent track shoe assembly to obtain the track shoe assembly 10 in figure 11. The ground contact surface is the V-shape rubber pad 530 and the part pressed by the road wheel is the rubber surface 173 that contacts with the road wheel.

Figures 53-58 show the V-shape rubber pad molded to the steel plate 45. A fixing bolt 454 is provided to fix the V-shape rubber pad to the steel plate 45. The V-shape rubber pad has a raised road contact surface. The tread lug 531 has a left-right parallelogram shape. When the V-shape rubber pads are installed on the left and right track shoes it will looks like a V-shape. The V-shape rubber pad is very effective in expelling water and soil from beneath the track which is a necessary requirement for a rescue vehicle operates on soft terrain, desert or snow.

## Claims

1. A track shoe assembly for a heavy tracked vehicle. The said track shoe assembly for the heavy tracked vehicle comprised of two sets of track shoe body 17, rubber pad 40, pin with rubber bushing 152, and end connector 153. The said track shoe body (17) is made from steel frame and rubberized. The end plate with track guide 31 projects beyond the enclose rubber. The pin 152 with rubber bushing 151 is inserted through both track shoe bodies 17 of the track shoe assembly in a manner that the end plates having the track guide 31 of both track shoe bodies abut each other and the end connectors 153 are covered on both ends of the pin 152. The track shoe assembly is linked to the adjacent track shoe assembly by putting the end connectors 153 on the end of the pin 152 of both track shoe assembly, followed by fixing the fixing bolt 154 to the wedge 157 and tightens the wedge to the cuts 156 provided on the pin at both ends of the track shoe assembly. The connector at the middle of the assembly is achieved by using a lower connector 163 and an upper connector 162 which are tightened together by the fixing bolt 161 and the nut 164.
The present track shoe assembly for heavy tracked vehicle is driven by a sprocket wheel 9 which drives the track shoe assembly at the end connector 153. Each component of the present track shoe assembly is separately manufactured, thus only the wear out part has to be replaced. The track shoe assembly for heavy tracked vehicle of the present invention has the following characters :
The track shoe body before rubberization comprises of two steel tubes 29, a steel tube 30, an end plate having track guide 31 and an end plate 32. The steel tubes 29 and 30 are laid parallel to each other in a manner that the steel tube 30, which has a smaller diameter, is placed between the steel tubes 29, which has a larger diameter. The ends of the steel tubes on one side, 291 and 301, are inserted into the holes 321 and 322 of the end plate 32, respectively. The steel tube 30 is drilled to make a rectangular hole 304 for the installation of a solid rectangular steel wedge 33. Then, all three tubes are welded altogether to provide strength of the track shoe body. A hole 331 is provided for the dumbbell-shape rubber pad 40 or the V-shape rubber pad 530 for fixing the rubber pad with a fixing bolt 454 and nut 155.
The end plate having track guide 31 comprises of two main components i.e. the track guide 311 and the steel frame 312. The track guide 311 is the part that projects from frame 312 having a round edges at the apex and an elliptic hole 313 at the centre. The thickness at the base of the track guide is larger than the thickness at the apex of the track guide. The elliptic hole 313 is provided to reduce friction between the track guide and the wall of the road wheel while the vehicle is moving. The steel frame 312 has three through bores. The bores 314 are for the ends of the steel tube 291 while the bore 315 is for the end of the steel tube 301.

2. The track shoe assembly for heavy tracked vehicle of claim 1, wherein the formed steel plate have curvatures 451 and 452 which correspond to the curvatures 171 and 172 of the steel tubes 29 and 30, respectively. The arch 452 is provided to improve the strength of the formed steel plate. The rim of the formed steel plate is provided with a hole for a permanent fixing of a fixing bolt 454 which is used for tightening the formed steel plate to the track shoe body with a nut 155.

3. The track shoe assembly for heavy tracked vehicle of claim 1, wherein two types of the following rubber pad are provided :
a) The dumbbell-shape rubber pad having a raised road contact surface integrally molded to the steel plate 45 having a fixing bolt 454. The dumbbell-shape rubber pad comprises of a tread lug 401 and notches 402 which makes the rubber pad look like a dumbbell. The corners 403 are slightly sliced off to prevent the ripping off at the edges.
b) The V-shape rubber pad having a raised road contact surface integrally molded to the steel plate 45 having a fixing bolt 454. The tread lug 531 has a left-right parallelogram shape. When the V-shape rubber pads are installed on the left and right track shoes it will looks like a V-shape.
